(19) Europäisches Patentamt / European Patent Office / Office européen des brevets

(11) **EP 3 039 314 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(21) Anmeldenummer: **14796657.6**

(22) Anmeldetag: **26.08.2014**

(51) Int Cl.:
*F16G 1/20* *(2006.01)*       *B21C 37/00* *(2006.01)*
*B65G 15/48* *(2006.01)*

(86) Internationale Anmeldenummer:
**PCT/AT2014/050185**

(87) Internationale Veröffentlichungsnummer:
**WO 2015/027263 (05.03.2015 Gazette 2015/09)**

(54) **ENDLOSBAND MIT EINEM BANDKÖRPER AUS METALL**

ENDLESS BELT WITH A BAND BODY FROM METAL

BANDE SANS FIN POURVUE D'UN CORPS DE BANDE EN MÉTAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2013 AT 505302013**

(43) Veröffentlichungstag der Anmeldung:
**06.07.2016 Patentblatt 2016/27**

(73) Patentinhaber: **Berndorf Band GmbH**
**2560 Berndorf (AT)**

(72) Erfinder:
• **STÜCKLER, Thomas**
**2630 Ternitz (AT)**
• **WAHL, Christian**
**2560 Berndorf (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
WO-A1-2009/080870       WO-A1-2011/108984
WO-A1-2014/089594       GB-A- 485 242

• Sandvik: "Seamless steel belt", Sandvik , 8. Mai 2012 (2012-05-08), XP002734332, Gefunden im Internet:
URL:http://www.processsystems.sandvik.com/ en/products/steel-belts-and-processing-sys tems/steel-belts/belt-types/seamless-steel -belt/ [gefunden am 2015-01-12]

**Beschreibung**

Die Erfindung betrifft ein Endlosband mit einem Bandkörper aus Metall.

Bei der Herstellung von kaschierter Wellpappe kommen Vorrichtungen mit Endlosbändern der eingangs genannten Art zum Einsatz, zum Beispiel WO 2009/080870. Prozessbedingt sind die herkömmlichen Vorrichtungen zur Herstellung von Wellpappe in ihrer für die Produktion zur Verfügung stehenden Länge baulich begrenzt. Dies stellt jedoch hinsichtlich der Steigerung der Produktivität der bestehenden Anlagen eine wesentliche Beschränkung dar.

Es ist daher eine Aufgabe der Erfindung, die Möglichkeit zu schaffen, die Produktivität bestehender Anlagen zur Herstellung von kaschierter Pappe zu steigern, ohne deren Baulänge in Materialflussrichtung zu vergrößern.

Diese Aufgabe wird mit einem Endlosband gemäß Anspruch 1 gelöst.

Die erfindungsgemäße Lösung schafft Endlosbänder, deren Breite im Verhältnis zu ihrer Umfangslänge sehr hoch ist. Auf diese Weise wird die für die Produktion von kaschierter Pappe zur Verfügung stehende Oberfläche der Endlosbänder wesentlich vergrößert, ohne die Prozesslänge der Vorrichtungen zu erhöhen. Dies ermöglicht, in derselben Produktionszeit wesentlich mehr Wellpappe herzustellen.

Gemäß einer Variante der Erfindung, welche sich durch eine einfache Herstellbarkeit auszeichnet, kann es vorgesehen sein, dass Endkanten des Bandkörpers miteinander verschweißt sind, sodass der Bandkörper einen geschlossenen Ring bildet, wobei das Endlosband in einem Verbindungsbereich der Endkanten des Bandkörpers zumindest eine Schweißnaht aufweist.

Eine vorteilhafte Ausführungsform sieht vor, dass die zumindest eine Schweißnaht des Endlosbandes eine gemittelte Rautiefe aufweist, die maximal 8,0 μm beträgt.

Um einen gleichmäßigen Wärmeübergang über das gesamte Endlosband zu gewährleisten, kann die zumindest eine Schweißnaht des Endlosbandes eine Planheitsabweichung von kleiner oder gleich 0,3 mm aufweist.

Gemäß einer vorteilhaften Weiterbildung der Erfindung weist die Schweißnaht eine Nahtbreite von kleiner oder gleich 4 mm auf. Nach einer Variante der Erfindung kann die zumindest eine Schweißnaht vorteilhafterweise über ihre gesamte Nahtlänge eine Geradheitsabweichung zwischen 0 und 15 mm aufweisen.

Der Bandkörper kann, abhängig von der Form des zur Verfügung stehenden Ausgangsmaterials, um die erfindungsgemäßen Abmessungen zu erzielen, aus einem einzigen Teil oder aus zumindest zwei Teilen gebildet sein, die an einander zugewandten Längskanten und/oder an aneinander zugewandten Stirnkanten miteinander verschweißt sind, wobei alle Schweißnähte des Endlosbandes gemäß einem der Ansprüche 2 bis 5 ausgebildet sind, wobei eine Dickendifferenz zwischen jeder Schweißnaht und daran unmittelbar angrenzenden Bereichen des Endlosbandes kleiner oder gleich 0,1mm oder 0 - 20% einer durchschnittlichen Dicke des Endlosbandes beträgt.

Nach einer vorteilhaften Weiterbildung kann es vorgesehen sein, dass das Endlosband über seine gesamte Umfangslänge betrachtet eine Abweichung der Breite zwischen 0 und 5 mm aufweist.

Weiters kann es vorgesehen sein, dass eine Längendifferenz zwischen einer ersten in Umfangsrichtung verlaufenden Seitenkante des Endlosbandes und einer zweiten in Umfangsrichtung des Endlosbandes verlaufenden Seitenkante des Endlosbandes zwischen 0 und 5 mm beträgt, wobei der Abstand zwischen den beiden Seitenkanten der Breite des Endlosbandes entspricht.

Günstigerweise weist der Bandkörper eine durchschnittliche Dicke zwischen 0,2 und 2 mm, insbesondere zwischen 0, 5 und 1 mm, aufweist, wobei die durchschnittliche Dicke über die gesamte Umfangslänge des Endlosbandes betrachtet um weniger als 20 % schwankt.

Entsprechend einer Ausführungsform der Erfindung kann das Endlosband einen Planheitsindex aufweisen, der kleiner oder gleich 8 ist.

Gemäß einer Variante der Erfindung kann das Endlosband eine Umfangslänge zwischen 0,2 m und 10 m, insbesondere zwischen 1 m und 4 m, eine Dicke zwischen 0,1 mm und 1 mm, insbesondere zwischen 0,2 mm und 0,8 mm und eine Breite zwischen 0,2 m und 10 m, insbesondere zwischen 2 m und 4 m aufweisen.

Besonders gute Eigenschaften hinsichtlich Verschleiß und Haltbarkeit lassen sich dadurch erzielen, dass das Endlosband aus einem Stahl gefertigt ist, der 0,09 % C, 15,0% Cr, 7,0% Ni, 0,7% Cu und 0,4% Ti aufweist. Die restlichen Anteile des Stahls gemäß dieser Variante der Erfindung werden durch Fe gebildet.

Gemäß einer bevorzugten Ausführungsform kann das Band einen Elastizitätsmodul von 190000 bis 210000 N/mm$^2$ aufweisen.

Zum besseren Verständnis der Erfindung wird diese anhand der nachfolgenden Figuren näher erläutert.

Es zeigen jeweils in stark vereinfachter, schematischer Darstellung:

Fig. 1      eine perspektivische Ansicht eines erfindungsgemäßen Endlosbandes und

Fig. 2      ein Diagramm zur Darstellung einer Welligkeit des Endlosbandes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

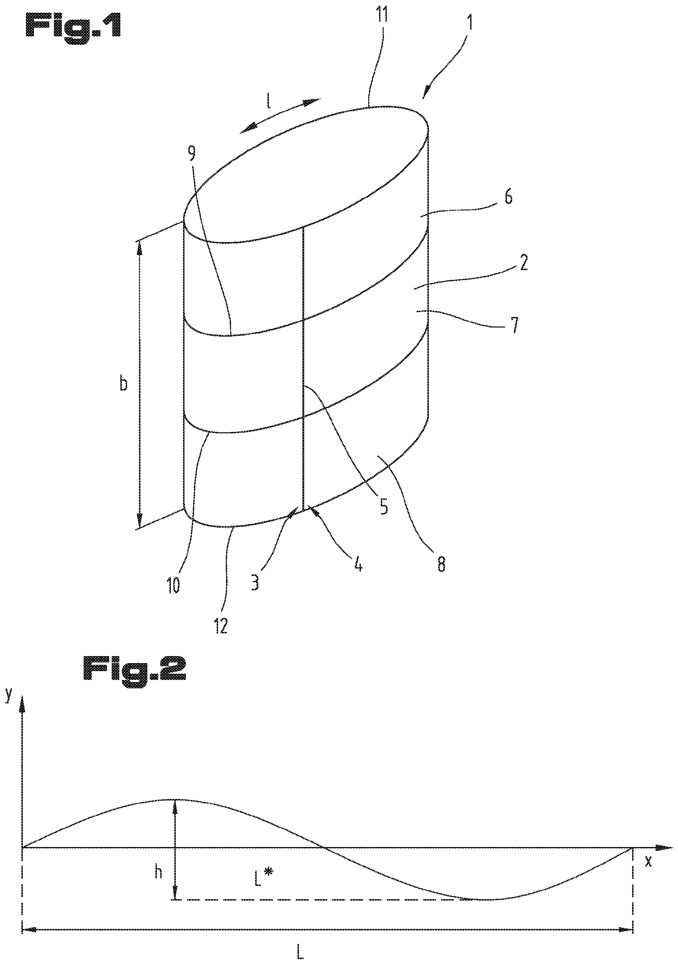

Gemäß Fig. 1 weist ein erfindungsgemäßes Endlosband 1 einen Bandkörper 2 aus Metall auf. Der Bandkörper 2 bildet einen geschlossenen Ring und kann gemäß einem Ausführungsbeispiel einstückig und durchgehend ohne Schweißnaht ausgebildet sein.

Alternativ zu einer Ausbildung ohne Schweißnaht können jedoch auch Endkanten 3, 4 des Bandkörpers 2 miteinander verschweißt sein. In einem Verbindungsbereich der Endkanten 3 und 4 weist das Endlosband 1 dann eine Schweißnaht 5 auf. Die Schweißnaht 5 kann hierbei quer (90°) oder schräg unter einem beliebigen Winkel, beispielsweise 45°, 80° etc., zu einer Bandlängsrichtung verlaufen. Das Verhältnis einer Umfangslänge 1 des Endlosbandes 1 zu einer quer zur Umfangslänge 1 verlaufenden Breite b des Endlosbandes 1 ist kleiner oder gleich 1,5.

Die Umfangslänge 1 kann zwischen 0,2 m und 10 m, insbesondere zwischen 1 m und 3 m betragen. Weiters kann das Endlosband 1 eine Dicke zwischen 0,1 mm und 1 mm, insbesondere zwischen 0,2 mm und 0,8 mm und eine Breite (b) zwischen 0,2 m und 10 m, insbesondere zwischen 2 m und 4 m aufweisen. So kann das erfindungsgemäße Endlosband 1 in einer Ausführungsform beispielsweise eine Länge 1 von ca. 2900 mm und eine Breite b von ca. 2800 mm aufweisen.

Die Oberfläche des Endlosbandes 1 kann behandelt oder unbehandelt sein. So kann die Oberfläche poliert, geschliffen, lackiert, geätzt, strukturiert oder glatt, kugel- und/oder sandgestrahlt und/oder beschichtet sein, beispielsweise mit einer Chrombeschichtung oder einer Schutz- und/oder Antihaftbeschichtung.

Die Schweißnaht 5 des Endlosbandes 1 kann beispielsweise eine gemittelte Rautiefe Rz aufweisen, die maximal 8,0 $\mu$m beträgt. Weiters kann die Schweißnaht 5 eine Planheitsabweichung von kleiner oder gleich 0,3 mm aufweisen. Die Planheitsabweichung kann mittels eines Haarlineals auf an sich bekannte Art ermittelt werden. Hierbei kann das Haarlineal mit einer Messkante beispielsweise quer zur Längserstreckung der zu prüfenden Schweißnaht 5 aufgesetzt werden. Im Gegenlicht kann anhand der Größe eines zwischen der Messkante des Haarlineals und der Oberfläche der Schweißnaht 5 liegenden Lichtspalts die als "Planheitsabweichung" bezeichnete Abweichung der Schweißnaht von einer geraden Fläche ermittelt werden. Eine quantitative Messung des Spaltes kann mittels einer Fühlerlehre erfolgen. Die Ermittlung der Planheitsabweichung der Schweißnaht 5 wird bevorzugt bei einer Bandspannung des Endlosbandes 1 von 30 N/mm² durchgeführt.

Darüber hinaus kann die Schweißnaht 5 eine Nahtbreite von kleiner oder gleich 4 mm aufweisen. Auch kann die Schweißnaht 5 über ihre gesamte Nahtlänge eine Geradheitsabweichung zwischen 0 und 15 mm aufweisen. Zur Bestimmung der Geradheitsabweichung der Schweißnaht 5 kann eine Gerade durch einen Anfangs- und einen Endpunkt der Schweißnaht 5 gelegt werden, wobei dann ein Normalabstand von neben dieser Gerade liegenden Punkten der Schweißnaht 5 zu der Gerade als Maß für die Geradheitsabweichung der Schweißnaht 5 herangezogen wird.

Der Bandkörper 2 kann auch aus zwei oder mehreren Teilen 6, 7, 8 bestehen, die an einander zugewandten Längskanten und/oder an aneinander zugewandten Stirnkanten miteinander verschweißt sind. So kann das Endlosband 1 aus drei oder mehr miteinander verbundenen Metallblechen gefertigt sein, die in Bandlängsrichtung hintereinander angeordnet sein können. Zwei unmittelbar benachbarte Bleche können hierbei jeweils an einander angrenzenden Kanten miteinander verschweißt sein. Die Schweißnähte zwischen den Blechen können hierbei quer oder schräg zur Bandlängsrichtung verlaufen.

Alternativ oder zusätzlich zu der in dem letzten Absatz genannten Ausführungsform kann das Endlosband 1 auch aus zwei oder mehr neben einander angeordneten Teilen 6, 7, 8 bestehen, die an Seitenkanten in Bandlängsrichtung miteinander verschweißt sind, wie dies beispielsweise in Fig. 1 dargestellt ist. In Fig. 1 sind die Längsschweißnähte, über welche die Teile 6, 7 und 8 verbunden sind, mit den Bezugszeichen 9 und 10 gekennzeichnet. Bevorzugt sind auch die Schweißnähte 9, 10 des Endlosbandes 1 gleichartig wie die Schweißnaht 5 ausgebildet, wobei eine Dickendifferenz zwischen jeder Schweißnaht 5, 9, 10 und daran unmittelbar angrenzenden Bereichen des Endlosbandes 1 kleiner oder gleich 0,1 mm oder 0 - 20% einer durchschnittlichen Dicke des Endlosbandes 1 beträgt.

Alternativ zu einer mehrteiligen Ausführungsform und zu einer Ausführungsform ohne Schweißnaht kann der Bandkörper 2 durch ein schraubenförmig gewickeltes Blech gebildet sein, das durch eine schraubenförmige Schweißnaht zusammen gehalten wird. In diesem Fall weist die Schweißnaht bevorzugterweise auch alle oben beschriebenen Eigenschaften der Schweißnaht 5 mit Ausnahme der Vorgaben für die Geradheitsabweichung auf.

Das Endlosband 1 weist über seine gesamte Umfangslänge betrachtet eine Abweichung der Breite b zwischen 0 und 5 mm auf, wobei eine Längendifferenz zwischen einer in ersten in Umfangsrichtung verlaufenden Seitenkante 11 des Endlosbandes 19 und einer zweiten in Umfangsrichtung des Endlosbandes 1 verlaufenden Seitenkante 12 des Endlosbandes 1 zwischen 0 und 5 mm beträgt, wobei der Abstand zwischen den beiden Seitenkanten 11, 12 der Breite b des Endlosbandes 1 entspricht.

Weiters kann der Bandkörper 2 eine durchschnittliche Dicke zwischen 0,2 und 2 mm, insbesondere zwischen 0, 5 und 1 mm, aufweisen, wobei die durchschnittliche Dicke über die gesamte Umfangslänge 1 des Endlosbandes 1 betrachtet um weniger als 20 %, insbesondere um weniger als 15% oder weniger als 10%, schwankt.

Darüber hinaus kann das Endlosband 1 gemäß einer bevorzugten Ausführungsform der Erfindung aus einem Stahl gefertigt sein, der 0,09 % C, 15,0% Cr, 7,0% Ni, 0,7% Cu und 0,4% Ti aufweist, wobei die restlichen Anteile des Stahls bevorzugt durch Fe gebildet werden. Weiters hat das Endlosband 1 eine Zugfestigkeit von 1200 bis 1600 N/mm$^2$ und kann einen Elastizitätsmodul von 190000 bis 210000 N/mm$^2$ aufweisen.

Bevorzugterweise weist das erfindungsgemäße Endlosband einen Planheitsindex I auf, der kleiner oder gleich 8, insbesondere kleiner oder gleich 6 oder kleiner oder gleich 4, ist. Der Planheitsindex wird gemäß Fig. 2 als Verhältnis zwischen der Differenz der Länge der Weilenlänge L* und der Wellenlänge L zu der Wellenlänge L bestimmt und ergibt sich zu

1)

$$I = \frac{\Delta L}{L} * 10^5$$

2)
Daraus ergibt sich vereinfacht:
2)

$$I = \frac{h^2}{L^2} * 250000$$

Mit L* = Länge der Wellenlinie, L = Wellenlänge und h = Wellenhöhe (doppelte Amplitude).

Der Ordnung halber sei abschließend darauf hingewiesen, dass zum besseren Verständnis des Aufbaus des erfindungsgemäßen Endlosbandes dieses bzw. dessen Bestandteile teilweise unmaßstäblich und/oder vergrößert und/oder verkleinert dargestellt wurden.

**Bezugszeichenaufstellung**

| | |
|---|---|
| 1 | Endlosband |
| 2 | Bandkörper |
| 3 | Endkante |
| 4 | Endkante |
| 5 | Schweißnaht |
| 6 | Teil des Bandkörpers |
| 7 | Teil des Bandkörpers |
| 8 | Teil des Bandkörpers |
| 9 | Schweißnaht |
| 10 | Schweißnaht |
| 11 | Seitenkante |
| 12 | Seitenkante |
| 1 | Umfangslänge |
| b | Breite |

**Patentansprüche**

1. Endlosband (1) mit einem Bandkörper (2) aus Metall für eine Vorrichtung zur Herstellung von Wellpappe, **dadurch gekennzeichnet, dass** das Verhältnis einer Umfangslänge (1) des Endlosbandes (1) zu einer quer zur Umfangslänge (1) verlaufenden Breite (b) des Endlosbandes (1) kleiner oder gleich 1,5 ist, wobei das Endlosband (1) eine Zugfestigkeit von 1200 bis 1600 N/mm$^2$ aufweist.

2. Endlosband nach Anspruch 1, **dadurch gekennzeichnet, dass** Endkanten (3, 4) des Bandkörpers (2) miteinander verschweißt sind, sodass der Bandkörper (2) einen geschlossenen Ring bildet, wobei das Endlosband (1) in einem Verbindungsbereich der Endkanten des Bandkörpers zumindest eine Schweißnaht (5) aufweist.

3. Endlosband nach Anspruch 2, **dadurch gekennzeichnet, dass** die zumindest eine Schweißnaht (5) des Endlosbandes eine gemittelte Rautiefe aufweist, die maximal 8,0 $\mu$m beträgt.

4. Endlosband nach Anspruch 2 oder 3, **dadurch gekennzeichnet, dass** die zumindest eine Schweißnaht (5) des Endlosbandes (1) eine Planheitsabweichung von kleiner oder gleich 0,3 mm aufweist.

5. Endlosband nach einem der Ansprüche 2 bis 4, **dadurch gekennzeichnet, dass** die Schweißnaht (5) eine Nahtbreite von kleiner oder gleich 4 mm aufweist.

6. Endlosband nach einem der Ansprüche 2 bis 5, **dadurch gekennzeichnet, dass** die zumindest eine Schweißnaht (5) über ihre gesamte Nahtlänge eine Geradheitsabweichung zwischen 0 und 15 mm aufweist.

7. Endlosband nach einem der Ansprüche 2 bis 6, **da-**

**durch gekennzeichnet, dass** der Bandkörper (2) aus zumindest zwei Teilen (6, 7, 8) gebildet ist, die an einander zugewandten Längskanten und/oder an aneinander zugewandten Stirnkanten miteinander verschweißt sind, wobei alle Schweißnähte (5, 9, 10) des Endlosbandes (1) gemäß einem der Ansprüche 2 bis 5 ausgebildet sind, wobei eine Dickendifferenz zwischen jeder Schweißnaht (5, 9, 10) und daran unmittelbar angrenzenden Bereichen des Endlosbandes (1) kleiner oder gleich 0,1mm oder 0 - 20% einer durchschnittlichen Dicke des Endlosbandes (1) beträgt.

8. Endlosband nach einem der Ansprüche 1 bis 7, **dadurch gekennzeichnet, dass** das Endlosband (1) über seine gesamte Umfangslänge betrachtet eine Abweichung der Breite (b) zwischen 0 und 5 mm aufweist.

9. Endlosband nach einem der Ansprüche 1 bis 8, **dadurch gekennzeichnet, dass** eine Längendifferenz zwischen einer in ersten in Umfangsrichtung verlaufenden Seitenkante (11) des Endlosbandes (19 und einer zweiten in Umfangsrichtung des Endlosbandes (1) verlaufenden Seitenkante (12) des Endlosbandes (1) zwischen 0 und 5 mm beträgt, wobei der Abstand zwischen den beiden Seitenkanten (11, 12) der Breite (b) des Endlosbandes (1) entspricht.

10. Endlosband nach einem der Ansprüche 1 bis 9, **dadurch gekennzeichnet, dass** der Bandkörper (2) eine durchschnittliche Dicke zwischen 0,2 und 2 mm, insbesondere zwischen 0, 5 und 1 mm, aufweist, wobei die durchschnittliche Dicke über die gesamte Umfangslänge (1) des Endlosbandes (1) betrachtet um weniger als 20 % schwankt.

11. Endlosband nach einem der Ansprüche 1 bis 10, **dadurch gekennzeichnet, dass** es einen Planheitsindex aufweist, der kleiner oder gleich 8 ist.

12. Endlosband nach einem der Ansprüche 1 bis 11, **dadurch gekennzeichnet, dass** es eine Umfangslänge (1) zwischen 0,2 m und 10 m, insbesondere zwischen 1 m und 4 m, eine Dicke zwischen 0,1 mm und 1 mm, insbesondere zwischen 0,2 mm und 0,8 mm und eine Breite (b) zwischen 0,2 m und 10 m, insbesondere zwischen 2 m und 4 m aufweist.

13. Endlosband nach einem der Ansprüche 1 bis 12, **dadurch gekennzeichnet, dass** das Endlosband aus einem Stahl gefertigt ist, der 0,09 % C, 15,0% Cr, 7,0% Ni, 0,7% Cu und 0,4% Ti aufweist.

14. Endlosband nach einem der Ansprüche 1 bis 13, **dadurch gekennzeichnet, dass** es einen Elastizitätsmodul von 190000 bis 210000 N/mm$^2$ aufweist.

**Claims**

1. An endless band (1) with a band body (2) from metal for an apparatus for producing corrugated cardboard, **characterized in that** the ratio of a circumferential length (1) of the endless band (1) to a width (b) of the endless band (1) extending transversely to the circumferential length (1) is less than or equal to 1.5, wherein the endless band (1) has a tensile strength of 1200 to 1600 N/mm$^2$.

2. The endless band according to claim 1, **characterized in that** end edges (3, 4) of the band body (2) are welded together such that the band body (2) forms a closed ring, wherein the endless band (1) has at least one weld seam (5) in a connecting region of the end edges of the band body.

3. The endless band according to claim 2, **characterized in that** the at least one weld seam (5) of the endless band has an averaged roughness depth which amounts to a maximum of 8.0 $\mu$m.

4. The endless band according to claim 2 or 3, **characterized in that** the at least one weld seam (5) of the endless band (1) has a flatness deviation of less than or equal to 0.3 mm.

5. The endless band according to one of claims 2 through 4, **characterized in that** the weld seam (5) has a seam width of less than or equal to 4 mm.

6. The endless band according to one of claims 2 through 5, **characterized in that** the at least one weld seam (5) has a straightness deviation of between 0 and 15 mm across its entire seam length.

7. The endless band according to one of claims 2 through 6, **characterized in that** the band body (2) is formed of at least two parts (6, 7, 8), which are welded together on longitudinal edges facing each other and/or on front edges facing each other, wherein all weld seams (5, 9, 10) of the endless band (1) are formed according to one of claims 2 through 5, wherein a thickness difference between each weld seam (5, 9, 10) and directly adjacent regions of the endless band (1) amounts to less than or equal to 0.1 mm or 0-20% of an average thickness of the endless band (1).

8. The endless band according to one of claims 1 through 7, **characterized in that** the endless band (1) has a deviation of the width (b) between 0 and 5 mm across its entire circumferential length.

9. The endless band according to one of claims 1 through 8, **characterized in that** a length difference between a first lateral edge (11) of the endless band (1) extending in circumferential direction and a second lateral edge (12) of the endless band (1) extending in circumferential direction amounts to between 0 and 5 mm, wherein the distance between the two lateral edges (11, 12) corresponds to the width (b) of the endless band (1).

10. The endless band according to one of claims 1 through 9, **characterized in that** the band body (2) has an average thickness between 0.2 and 2 mm, in particular between 0.5 and 1 mm, wherein the average thickness across the entire circumferential length (1) of the endless band (1) fluctuates by less than 20%.

11. The endless band according to one of claims 1 through 10, **characterized in that** it has a flatness index which is less than or equal to 8.

12. The endless band according to one of claims 1 through 11, **characterized in that** it has a circumferential length (1) of between 0.2 m and 10 m, in particular between 1 m and 4 m, a thickness of between 0.1 mm and 1 mm, in particular between 0.2 mm and 0.8 mm and a width (b) of between 0.2 m and 10 m, in particular between 2 m and 4 m.

13. The endless band according to one of claims 1 through 12, **characterized in that** the endless band is manufactured from steel comprising 0.09% C, 15.0% Cr, 7.0% Ni, 0.7% Cu and 0.4% Ti.

14. The endless band according to one of claims 1 through 13, **characterized in that** it has an elastic modulus of 190000 to 210000 N/mm$^2$.


**Revendications**

1. Bande sans fin (1) avec un corps de bande (2) en métal pour un dispositif de fabrication de carton ondulé, **caractérisée en ce que** le rapport entre une circonférence (1) de la bande sans fin (1) et une largeur (b) s'étendant transversalement par rapport à la circonférence (1), de la bande sans fin (1), est inférieur ou égal à 1,5, la bande sans fin (1) présentant une résistance à la traction de 1 200 à 1 600 N/mm$^2$.

2. Bande sans fin selon la revendication 1, **caractérisée en ce que** les arêtes d'extrémité (3, 4) du corps de bande (2) sont soudées entre elles de façon à ce que le corps de bande (2) forme un anneau fermé, la bande sans fin (1) comprenant, dans une zone de liaison des arêtes d'extrémité du corps de bande, au moins un cordon de soudure (5).

3. Bande sans fin selon la revendication 2, **caractérisée en ce que** l'au moins un cordon de soudure (5) de la bande sans fin présente une rugosité moyenne de 8,0 μm maximum.

4. Bande sans fin selon la revendication 2 ou 3, **caractérisée en ce que** l'au moins un cordon de soudure (5) de la bande sans fin (1) présente un écart de planéité inférieur ou égal à 0,3 mm.

5. Bande sans fin selon l'une des revendications 2 à 4, **caractérisée en ce que** le cordon de soudure (5) présente une largeur de cordon inférieure ou égale à 4 mm.

6. Bande sans fin selon l'une des revendications 2 à 5, **caractérisée en ce que** l'au moins un cordon de soudure (5) présente, sur toute sa longueur, un écart de linéarité entre 0 et 15 mm.

7. Bande sans fin selon l'une des revendications 2 à 6, **caractérisée en ce que** le corps de bande (2) est constitué d'au moins deux parties (6, 7, 8), qui sont soudées entre elles au niveau d'arêtes longitudinales orientées les unes vers les autres et/ou au niveau d'arêtes frontales orientées les unes vers les autres, tous les cordons de soudure (5, 9, 10) de la bande sans fin (1) étant conçus selon l'une des revendications 2 à 5, une différence d'épaisseur entre chaque cordon de soudure (5, 9, 10) et les zones directement adjacentes de la bande sans fin (1) étant inférieure ou égale à 0,1 mm ou de 0 à 20 % d'une épaisseur moyenne de la bande sans fin (1).

8. Bande sans fin selon l'une des revendications 1 à 7, **caractérisée en ce que** la bande sans fin (1) présente, vu sur toute sa circonférence, un écart de largeur (b) entre 0 et 5 mm.

9. Bande sans fin selon l'une des revendications 1 à 8, **caractérisée en ce qu'**une différence de longueur entre une première arête latérale (11), s'étendant dans la direction circonférentielle, de la bande sans fin (1) et une deuxième arête latérale (12) de la bande sans fin (1), s'étendant dans la direction circonférentielle, de la bande sans fin (1) est entre 0 et 5 mm, la distance entre les deux arêtes latérales (11, 12) correspondant à la largeur (b) de la bande sans fin (1).

10. Bande sans fin selon l'une des revendications 1 à 9, **caractérisée en ce que** le corps de bande (2) présente une épaisseur moyenne entre 0,2 et 2 mm, plus particulièrement entre 0,5 et 1 mm, l'épaisseur moyenne variant, vue sur toute la circonférence (1) de la bande sans fin (1), de moins de 20 %.

11. Bande sans fin selon l'une des revendications 1 à 10, **caractérisée en ce qu'**elle présente un indice de planéité inférieur ou égal à 8.

**12.** Bande sans fin selon l'une des revendications 1 à 11, **caractérisée en ce qu'**elle présente une circonférence (1) entre 0,2 m et 10 m, plus particulièrement entre 1 m et 4 m, une épaisseur entre 0,1 mm et 1 mm, plus particulièrement entre 0,2 mm et 0,8 mm et une largeur (b) entre 0,2 m et 10 m, plus particulièrement entre 2 m et 4 m.

**13.** Bande sans fin selon l'une des revendications 1 à 12, **caractérisée en ce que** 1 bande sans fin est constitué d'un acier qui contient 0,09 % C, 15,0 % Cr, 7,0 % Ni, 0,7 % Cu et 0,4 % Ti.

**14.** Bande sans fin selon l'une des revendications 1 à 13, **caractérisée en ce qu'**elle présente un module d'élasticité de 190 000 à 210 000 N/mm$^2$.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009080870 A